# FASCICULE DE BREVET EUROPEEN

(11) **EP 3 516 452 B1**
(45) Date de publication et mention de la délivrance du brevet: **19.05.2021**
(21) Numéro de dépôt: 17765192.4
(22) Date de dépôt: 14.09.2017
(51) Int. Cl.: G02F 1/03

(54) **CELLULE DE POCKELS ATHERMIQUE**
ATHERMISCHE POCKELZELLE
ATHERMAL POCKELS CELL

(30) Priorité: 22.09.2016 FR 1601378
(43) Date de publication de la demande: 31.07.2019
(73) Titulaire: Thales, 92400 Courbevoie (FR)
(72) Inventeur: DURAND, Eric, 78283 Guyancourt Cedex (FR); DERYCKE, Christophe, 78283 Guyancourt Cedex (FR); BOUDJEMAA, Laurent, 78283 Guyancourt Cedex (FR); DAVID, Stéphane, 78283 Guyancourt Cedex (FR)
(74) Mandataire: Marks & Clerk France
(86) Numéro de dépôt international: PCT/EP2017/073105
(87) Numéro de publication internationale: WO 2018/054751

(56) Documents cités:
- US-A- 5 035 495
- US-A1- 2007 236 771
- BIAZZO M R: "Fabrication of a lithium tantalate temperature-stabilized optical modulator", APPLIED OPTICS, OPTICAL SOCIETY OF AMERICA, WASHINGTON, DC; US, vol. 10, no. 5, 1 mai 1971 (1971-05-01), pages 1016-1021, XP002111160, ISSN: 0003-6935, DOI: 10.1364/AO.10.001016

## Description

Le domaine de l'invention est celui des cellules de Pockels utilisées notamment dans les domaines de l'amplification des faisceaux laser et des commutateurs en longueur d'onde.

Les matériaux électro-optiques changent la polarisation de la lumière par l'application d'une tension électrique à l'intérieur du matériau. Ces matériaux sont souvent associés à des polariseurs, de façon à réaliser des commutateurs électro-optiques encore appelés cellules de Pockels. Un polariseur laisse passer sélectivement un faisceau lumineux dont la polarisation est dans un état prédéterminé. Un matériau électro-optique permet de changer cet état en appliquant une tension. On peut ainsi contrôler la transmission du faisceau lumineux par l'intermédiaire d'une tension électrique.

De nombreuses configurations d'utilisation de cellules de Pockels ont été mises en œuvre dans le domaine de l'amplification de faisceaux lasers. L'une de ces configurations, encore appelée « Q-switch », consiste à activer une cellule de Pockels située dans la cavité laser, de façon à augmenter les pertes d'un oscillateur (ou de façon équivalente à diminuer la transmission de la cellule) : l'impulsion laser est alors piégée dans la cavité. En appliquant soudain une tension à la cellule de Pockels, on supprime les pertes de la cavité, ce qui permet de libérer l'impulsion laser. Ce phénomène est à l'origine des oscillateurs lasers Q-switchés (à impulsions courtes typiquement comprises entre 5ns et 40 ns).

Les cellules de Pockels à deux cristaux en champs transverses montés en compensation thermique permettent de réaliser des commutateurs optiques avec des tensions électriques peu importantes. Ces cellules utilisent deux cristaux électro-optiques en série ce qui permet de réduire le niveau de la tension à appliquer pour les activer. Les cristaux utilisés sont en général des cristaux dits biaxes : leur biréfringence naturelle dépend de leur axe de coupe (axes X ou Y) et varie également fortement avec la température. Le montage des cristaux en compensation thermique permet, en orientant précisément les cristaux l'un par rapport à l'autre, de compenser la biréfringence naturelle de l'un par celle de l'autre et cette compensation est effective sur une gamme de températures extrêmement large de - 40° à + 60° par exemple. La qualité de la compensation, à l'origine de la plage de température sur laquelle la cellule de Pockels sera opérationnelle, dépend de la précision de réglage relative des deux cristaux mais aussi de leur similarité. On parle de cristaux « jumeaux » qui doivent, comme leur nom l'indique, être le plus similaire possible. Pour cette raison, les deux cristaux de ces cellules sont généralement polis ensemble de façon à avoir des dimensions identiques.

Le choix des cristaux (les plus semblables possible) et leur montage assurent le fonctionnement correct de la cellule de Pockels sur de très larges gammes de températures, sous réserve de ne pas perturber la compensation thermique mise en œuvre sur les cristaux.

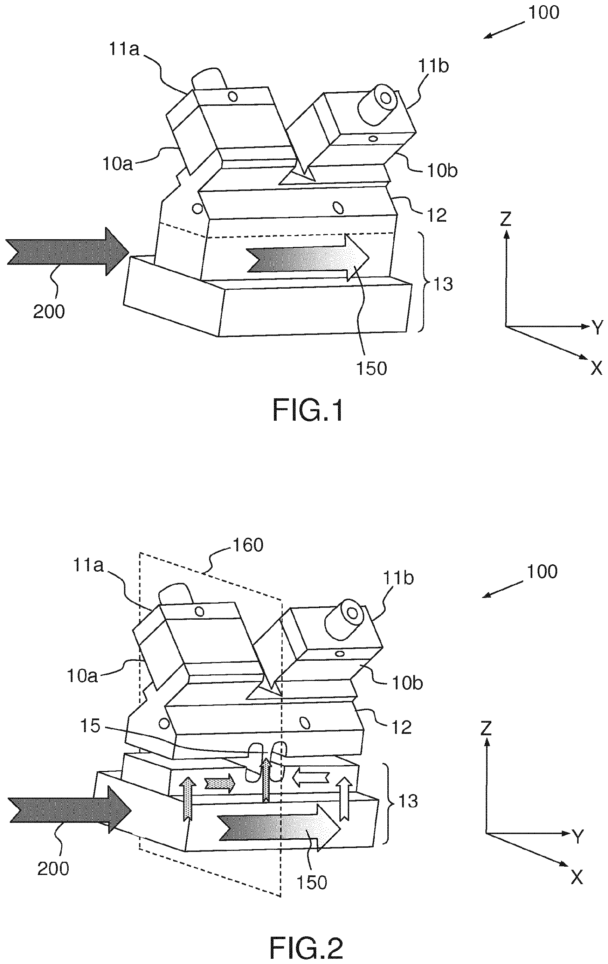

La figure 1 montre une cellule de Pockels 100 à deux cristaux 10a, 10b montés en compensation thermique, selon l'état de l'art. Les deux cristaux jumeaux sont préréglés et collés sur un socle commun 12 qui sert également d'électrode. Une plaquette métallique 11a, 11b collée sur chaque cristal 10a, 10b permet d'appliquer la tension et de modifier la transmission de la cellule. Le socle 12 est fixé à une structure porteuse 13.

Mais une telle cellule de Pockels est souvent perturbée par des facteurs extérieurs inhérents aux applications visées. Les oscillateurs ou amplificateurs laser nécessitent le pompage d'un milieu amplificateur : il est nécessaire d'apporter au milieu amplificateur de l'énergie lumineuse de façon à la stocker pour la restituer dans un deuxième temps sous la forme d'un faisceau monochromatique et cohérent. C'est l'effet laser.

Cet apport d'énergie lumineuse au milieu amplificateur n'est pas parfait, car une partie de l'énergie nécessaire pour la produire est transformée en chaleur 200.

On a vu précédemment que les cellules de Pockels à deux cristaux montés en compensation fonctionnent correctement sur de larges gammes de température à condition que les cristaux conservent leur similarité de façon à maintenir la compensation thermique. Or, si la puissance thermique générée par le pompage induit une différence de température entre les deux cristaux comme illustré figure 1 par la flèche 150 (à intensité décroissante), alors une disparité est créée et la cellule 100 ne fonctionne plus correctement.

L'évacuation de la puissance thermique ainsi générée ne pose en général pas de problème dans un environnement « terrestre » peu contraignant : on évite que la puissance thermique générée se transmette à la cellule, soit en l'éloignant, soit en l'isolant thermiquement de la source de chaleur comme décrit par exemple dans le brevet EP 1 532 482. La première solution n'est pas souhaitable dans un environnement spatial où l'équipement doit occuper un volume minimal. La seconde solution est également difficile à mettre en œuvre de façon efficace dans un encombrement réduit sans fragiliser la rigidité de l'équipement.

Dans un environnement plus contraint de type spatial par exemple, où l'encombrement est très limité et où l'utilisation de fluides d'évacuation proscrite, la puissance thermique générée par le pompage s'évacue le plus souvent par conduction à travers les structures porteuses de l'équipement. Dans cet environnement contraint, la cellule de Pockels est le plus souvent située dans l'environnement immédiat de la source de chaleur. La puissance thermique générée par le système de pompage se transmet alors inévitablement à la cellule de Pockels.

Le document US2007/236771 décrit un système pour amplification laser comprenant une cellule de Pockels à deux cristaux électrooptiques permettant de contrôler l'émission des impulsions laser. L'un des cristaux est orientable en rotation par rapport à l'autre de manière à contrôler la forme des impulsions laser.

En conséquence, il demeure à ce jour un besoin pour une cellule de Pockels donnant simultanément satisfaction à l'ensemble des exigences précitées, en termes d'évacuation de la chaleur, et d'environnement contraint de type spatial par exemple où l'encombrement est très limité et où l'utilisation de fluides d'évacuation proscrite.

Plutôt que de supprimer la transmission de la puissance thermique à la cellule de Pockels afin d'éviter la création d'un gradient de températures entre les deux cristaux, la cellule de Pockels selon l'invention comporte des moyens pour que cette puissance soit transmise aux deux cristaux de la cellule de façon symétrique, afin de ne pas briser la compensation du montage.

Plus précisément l'invention a pour objet une cellule de Pockels qui comporte :
- deux cristaux électro-optiques similaires orientés en compensation thermique sur
- un socle métallique horizontal commun aux deux cristaux, et
- une structure porteuse.

Elle est principalement caractérisée en ce qu'elle comporte entre le socle et la structure porteuse un élément thermiquement conducteur, à configuration symétrique selon un plan vertical passant entre les deux cristaux, pour répartir symétriquement vers le socle, un flux thermique généré dans la structure porteuse de manière asymétrique selon ce plan vertical.

Ainsi lorsqu'une source thermique, située à proximité, génère une puissance thermique qui se dissipe dans la structure porteuse de l'équipement de manière asymétrique, le flux thermique ne peut se transmettre aux cristaux que par l'intermédiaire de l'élément thermiquement conducteur. Grâce à cet élément qui est situé dans un plan de symétrie pour la cellule juste au milieu des deux cristaux, le flux thermique asymétrique dans la structure porteuse est réparti de façon symétrique dans chacun des deux cristaux de la cellule de Pockels : cela empêche l'établissement d'un gradient de température entre les cristaux. La compensation est donc conservée quel que soit le flux thermique dissipé dans la cellule. Cette solution est compacte (ne nécessite pas d'augmentation de volume) et est indépendante du flux thermique à dissiper.

Cet élément thermiquement conducteur est par exemple une lame verticale.

Il peut aussi être constitué :
- d'un cadre horizontal destiné à être en contact avec la structure porteuse, avec en son centre évidé,
- une plaquette horizontale sur laquelle est monté le socle, et reliée au cadre par
- un bras situé dans le plan vertical passant au milieu des deux cristaux.

Selon un autre mode de réalisation, l'élément thermiquement conducteur est un plateau horizontal muni de tresses thermiques disposées sur les bords du plateau et perpendiculaires au plan vertical passant au milieu des deux cristaux.

L'invention a aussi pour objet un laser Q-switch à cavité laser comportant une cellule de Pockels telle que décrite, ou un commutateur de longueur d'onde qui comporte un laser et en sortie du laser, une cellule de Pockels telle que décrite, puis un dispositif permettant de changer la longueur d'onde.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite représente schématiquement une cellule de Pockels selon l'état de la technique perturbée par une source de chaleur externe,
la figure 2 représente schématiquement une cellule de Pockels athermique selon l'invention, soumise à une source de chaleur externe,
les figures 3 représentent schématiquement un exemple d'élément thermiquement conducteur d'une cellule de Pockels athermique selon l'invention en perspective (fig 3a), avec une vue de l'élément thermiquement conducteur seul en perspective (fig 3b),
la figure 4 représente schématiquement un autre exemple d'élément thermiquement conducteur d'une cellule de Pockels athermique selon l'invention, avec une vue d'ensemble en perspective,
la figure 5 illustre l'influence de la densité du flux thermique (en abscisse) sur la différence de T° entre les cellules (en ordonnée), avec et sans élément conducteur.

D'une figure à l'autre, les mêmes éléments sont repérés par les mêmes références.

Dans la suite de la description, les expressions « haut », « bas », « avant », « arrière », « côté », « horizontal », « vertical » sont utilisées en référence à l'orientation des figures décrites. Dans la mesure où la cellule ou les éléments thermiquement conducteurs peuvent être positionnés selon d'autres orientations, la terminologie directionnelle est indiquée à titre d'illustration et n'est pas limitative.

Plutôt que d'éviter la transmission de la puissance thermique à la cellule de Pockels pour éviter la création d'un gradient de températures, l'invention fait en sorte que cette puissance soit transmise aux deux cristaux de la cellule de façon symétrique, pour ne pas briser la compensation thermique du montage.

La cellule de Pockels selon l'invention décrite en relation avec les figures 2, 3 et 4 comporte deux cristaux 10a, 10b électro-optiques parallélépipédiques similaires orientés en compensation thermique dans la direction Y du rayonnement sur un socle 12 métallique horizontal commun aux deux cristaux. Ils sont disposés l'un après l'autre sur ce socle à une certaine distance l'un de l'autre. Chacun est muni d'électrodes sur deux surfaces opposées l'une à l'autre. Le socle commun 12 sert également d'électrode commune aux deux cristaux. Une plaquette métallique 11a, 11b collée sur chaque cristal 10a, 10b constitue la deuxième électrode et permet d'appliquer la tension et de modifier la transmission de la cellule. La surface de l'autre électrode 11a d'un cristal 10a est pivotée de 90° par rapport à la surface de l'autre électrode 11b de l'autre cristal 10b selon la direction Y de rayonnement. Le socle 12 est fixé à une structure porteuse 13.

Une source thermique externe 200 située à proximité de la structure porteuse 13, génère une puissance thermique qui se dissipe dans la structure porteuse de la cellule de manière asymétrique par rapport au plan 160 vertical. Cette source thermique peut aussi être en contact avec la structure porteuse.

Dans la suite on considère que la source thermique 200 est une source de chaleur générant un flux de chaleur 150 asymétrique dans la structure porteuse comme montré sur l'exemple de la figure 2, mais la description s'applique de la même façon à une source froide générant un flux froid.

Selon l'invention, le flux de chaleur 150 présent dans la structure porteuse 13 ne se transmet aux cristaux 10a, 10b que par l'intermédiaire d'un élément thermiquement conducteur situé entre le socle 12 et la structure porteuse 13, et en contact avec eux. Cet élément a une configuration symétrique par rapport au plan 160 vertical (selon XZ donc) de symétrie passant entre les deux cristaux 10a, 10b et au milieu d'eux. Le flux de chaleur asymétrique est par conséquent réparti de façon symétrique vers le socle 12 et donc dans chacun des deux cristaux 10a, 10b, ce qui empêche l'établissement d'un gradient de température entre les cristaux. Il permet ainsi de symétriser entre les deux cristaux le gradient de température présent dans la structure porteuse, afin de préserver la compensation thermique. La compensation est donc conservée quel que soit le flux de chaleur dissipé dans la cellule.

Cette solution est compacte (ne nécessite pas d'augmentation de volume) et est indépendante du flux de chaleur à dissiper.

La figure 2 montre un mode préféré de réalisation mettant en œuvre un élément thermiquement conducteur sous forme de lame 15 située dans le plan 160 de symétrie vertical entre les deux cristaux, et sur une longueur égale à la largeur (selon X) du socle. Elle est mince selon Y pour mieux canaliser la conduction tout en préservant sa solidité. Selon ce mode de réalisation le socle 12 et la structure porteuse 13 sont séparés par un coussin d'air (ou autre) sauf au niveau de la lame.

La lame verticale 15 et le socle 12 peuvent former une seule pièce. La lame verticale 15 et la structure porteuse 13 peuvent former une seule pièce. Enfin, la lame verticale 15, le socle 12 et la structure porteuse 13 peuvent former une seule pièce comme montré sur la figure 2. Des parties du socle et de la structure porteuse ont été creusées symétriquement par rapport au plan 160 au niveau de la lame pour favoriser la conduction thermique par la lame et diminuer la conduction par l'espace d'air entre le socle et la structure porteuse.

Cette solution est intéressante compte-tenu des environnements envisagés (spatial), car elle peut être facilement miniaturisée.

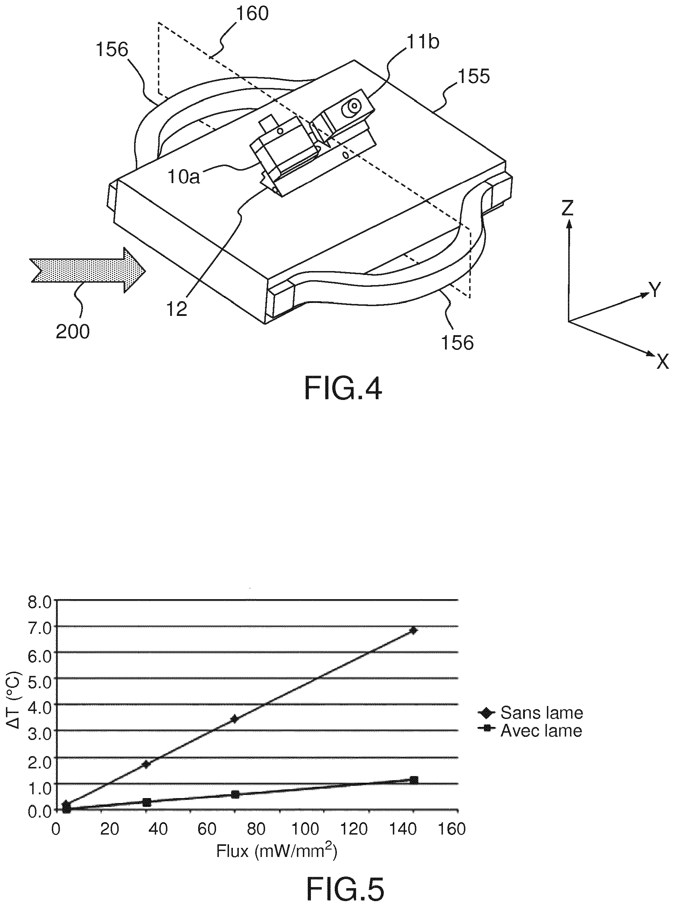

Des simulations thermiques ont permis de comparer le gradient thermique induit dans une cellule de Pockels standard telle que montrée figure 1, à celui calculé dans les mêmes conditions avec une cellule de Pockels athermique telle que montrée figure 2. Ces calculs présentés figure 5 simulent le comportement thermique d'une cellule de Pockels dans un cas typique d'échange (flux de chaleur de 80 mW/mm² sur une surface de 75 mm²). La convection naturelle, le rayonnement et la conduction sont pris en compte dans ces simulations. On constate que le gradient thermique entre les cristaux de la cellule de Pockels est de 3,5°C dans un cas représentatif de l'état de l'art et de 0,6°C dans une configuration athermique selon l'invention. La différence est d'autant plus importante que le flux de chaleur externe considéré est important. Dans les conditions typiques considérées, le gradient de température dans la cellule de Pockels athermique est divisé par presque 6 par rapport à une cellule de Pockels de l'état de la technique.

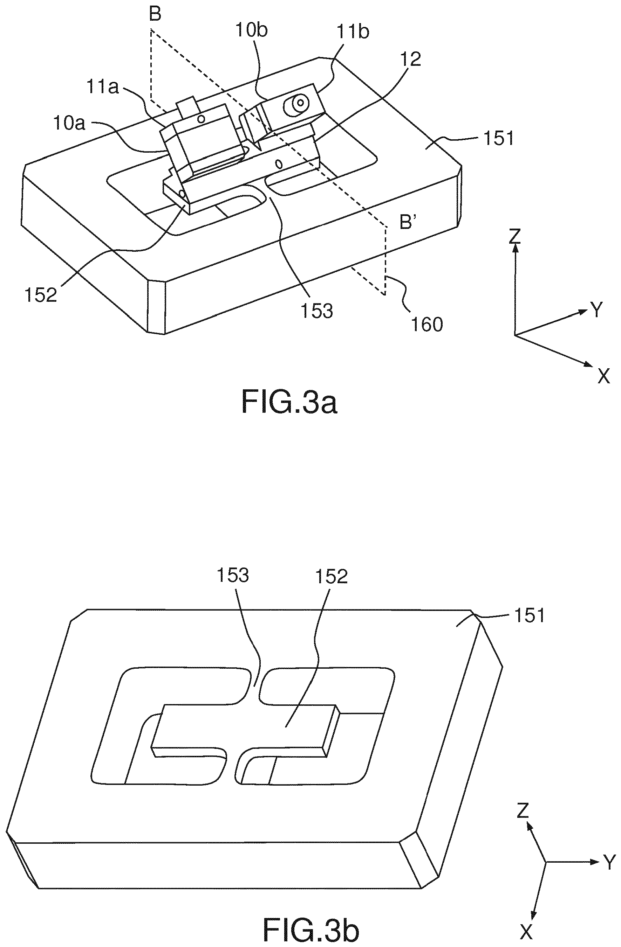

Un deuxième exemple de cellule de Pockels athermique selon l'invention peut être réalisé, qui permet de canaliser horizontalement la puissance thermique de la source de chaleur externe jusqu'au plan vertical de symétrie de la cellule de Pockels. L'élément thermiquement conducteur montré figures 3 est constitué d'un cadre 151 horizontal (selon XY) de préférence creux, d'épaisseur verticale (selon Z) prédéterminée, destiné à être en contact avec la structure porteuse non représentée sur les figures 3. Dans son centre évidé, est placée une plaquette 152 horizontale de préférence pleine pour des raisons thermiques, d'épaisseur verticale inférieure à l'épaisseur verticale du cadre 151 et sur laquelle est monté le socle 12. Elle est reliée au cadre 151 par un (ou deux) bras 153 plein ou creux, situé dans le plan vertical 160 passant au milieu des deux cristaux. L'épaisseur verticale (selon Z) du bras 153 est par exemple égale à celle du cadre 151 mais peut être inférieure ; comme dans l'exemple de la lame 15 de la figure 2, sa largeur (selon Y) est très inférieure à celle de la plaquette 152 pour concentrer la conduction par son canal. D'autres configurations sont envisageables. Par exemple, la dimension du bras 153 selon Z est telle que la plaquette est surélevée par rapport au cadre 151.

Un troisième exemple de cellule athermique selon l'invention peut être réalisé, dans lequel l'élément thermiquement conducteur montré figure 4 est un plateau horizontal 155 muni de tresses thermiques 156 ou de caloducs disposés sur les bords du plateau, perpendiculaires au plan vertical 160 passant au milieu des deux cristaux, pour symétriser la dissipation thermique dans la cellule. Ce plateau 155 peut être rectangulaire comme montré dans l'exemple de la figure mais pas nécessairement ; plus généralement il a une forme symétrique par rapport au plan vertical 160 passant entre les cristaux. Il est destiné à être en contact avec la structure porteuse non représentée sur la figure 4.

Jusqu'à présent on a considéré dans la description que la structure porteuse était soumise à une source thermique ne provenant que d'une direction « latérale » comme illustré sur les figures 2 et 4, mais bien sûr elle peut provenir de plusieurs directions latérales et/ou provenant par en-dessous de la structure porteuse 13.

Les applications visées sont la réalisation d'oscillateurs laser Q-switchés (par une cellule de Pockels). Une application proche est d'utiliser la cellule de Pockels pour introduire ou faire sortir une impulsion lumineuse déjà existante dans un amplificateur laser. Comme pour le Q-switch, on utilise la possibilité de modifier la polarisation du faisceau laser en appliquant une tension. Pour ces deux applications, la cellule de Pockels est associée à un polariseur permettant de contrôler la transmission du faisceau laser.

On peut également associer la cellule de Pockels à tout autre élément sensible à la polarisation de la lumière laser. Par exemple, si au lieu d'associer la cellule à un polariseur, on l'associe à un générateur d'harmonique (permettant de générer de nouvelles longueurs d'onde ou de nouvelles couleurs de faisceau à partir d'un changement de polarisation), il est possible de créer un commutateur de longueur d'onde, en lieu et place d'un dispositif modifiant la transmission.

## Revendications

1. Cellule de Pockels (100) qui comporte deux cristaux (10a, 10b) électro-optiques similaires orientés en compensation thermique sur un socle (12) métallique horizontal commun aux deux cristaux, une structure porteuse (13), et comportant en outre entre le socle (12) et la structure porteuse (13) un élément thermiquement conducteur, **caractérisé en ce que** l'élément thermiquement conducteur présente une configuration symétrique selon un plan vertical (160) passant entre les deux cristaux, pour répartir symétriquement vers le socle (12), un flux thermique (150) généré dans la structure porteuse (13) de manière asymétrique par rapport au plan vertical (160).

2. Cellule de Pockels selon la revendication précédente, **caractérisée en ce que** l'élément thermiquement conducteur est une lame verticale (15).

3. Cellule de Pockels selon la revendication 2, **caractérisée en ce que** la lame verticale (15) et le socle (12) forment une seule pièce.

4. Cellule de Pockels selon la revendication 2, **caractérisée en ce que** la lame verticale (15) et la structure porteuse (13) forment une seule pièce.

5. Cellule de Pockels selon la revendication 2, **caractérisée en ce que** la lame verticale (15), le socle (12) et la structure porteuse (13) forment une seule pièce.

6. Cellule de Pockels selon la revendication 1, **caractérisée en ce que** l'élément thermiquement conducteur est constitué :
- d'un cadre (151) horizontal destiné à être en contact avec la structure porteuse (13), avec en son centre évidé,
- une plaquette (152) horizontale sur laquelle est monté le socle (12), et qui est reliée au cadre (151) par
- un bras (153) situé dans le plan vertical (160) passant entre les deux cristaux.

7. Cellule de Pockels selon la revendication 1, **caractérisée en ce que** l'élément thermiquement conducteur est un plateau (155) horizontal muni de tresses thermiques (156) disposées sur les bords du plateau perpendiculaires au plan vertical (160) passant entre les deux cristaux.

8. Laser Q-switch à cavité laser comportant une cellule de Pockels selon l'une des revendications précédentes.

9. Commutateur de longueur d'onde qui comporte un laser et en sortie du laser, une cellule de Pockels selon l'une des revendications 1 à 7.

## Patentansprüche

1. Pockelszelle (100), umfassend zwei ähnliche elektrooptische Kristalle (10a, 10b), die in thermischer Kompensation auf einem horizontalen Metallsockel (12) ausgerichtet sind, der beiden Kristallen gemeinsam ist, eine Trägerstruktur (13), und ferner umfassend zwischen dem Sockel (12) und der Trägerstruktur (13) ein thermisch leitfähiges Element,
**dadurch gekennzeichnet, dass** das thermisch leitfähige Element eine symmetrische Konfiguration entlang einer vertikalen Ebene (160) aufweist, welche zwischen den beiden Kristallen passiert, um symmetrisch in Richtung des Sockels (12) einen thermischen Fluss (150) zu verteilen, welcher in der Trägerstruktur (13) asymmetrisch in Bezug auf die vertikale Ebene (160) erzeugt wird.

2. Pockelszelle nach dem vorhergehenden Anspruch, **dadurch gekennzeichnet, dass** das thermisch leitfähige Element ein vertikales Blatt (15) ist.

3. Pockelszelle nach Anspruch 2, **dadurch gekennzeichnet, dass** das vertikale Blatt (15) und der Sockel (12) ein einziges Teil bilden.

4. Pockelszelle nach Anspruch 2, **dadurch gekennzeichnet, dass** das vertikale Blatt (15) und die Trägerstruktur (13) ein einziges Teil bilden.

5. Pockelszelle nach Anspruch 2, **dadurch gekennzeichnet, dass** das vertikale Blatt (15), der Sockel (12) und die Trägerstruktur (13) ein einziges Teil bilden.

6. Pockelszelle nach Anspruch 1, **dadurch gekennzeichnet, dass** das thermisch leitfähige Element besteht aus:
- einem horizontalen Rahmen (151), dazu bestimmt, mit der Trägerstruktur (13) in Kontakt zu stehen, umfassend in seinem ausgesparten Mittelpunkt:
- ein horizontales Plättchen (152), auf welchem der Sockel (12) montiert ist, und welches mit dem Rahmen (151) verbunden ist durch:
- einen Arm (153), befindlich in einer vertikalen Ebene (160), welche zwischen den beiden Kristallen passiert.

7. Pockelszelle nach Anspruch 1, **dadurch gekennzeichnet, dass** das thermisch leitfähige Element eine mit thermischen Litzen (156) versehene horizontale Platte (155) ist, welche an den Rändern der Platte angeordnet sind, welche rechtwinklig zu der vertikalen Ebene (160) sind, welche zwischen den beiden Kristallen passiert.

8. Q-Switch-Laser mit Laserhohlraum, umfassend eine Pockelszelle nach einem der vorhergehenden Ansprüche.

9. Wellenlängenschalter, umfassend einen Laser und am Ausgang des Lasers, eine Pockelszelle nach einem der Ansprüche 1 bis 7.

## Claims

1. Pockels cell (100) that contains two similar electro-optical crystals (10a, 10b) oriented to achieve temperature compensation on a horizontal metal base (12) common to the two crystals, a carrier structure (13), and further containing, between the base (12) and the carrier structure (13), a thermally conductive element,
**characterized in that** the thermally conductive element has a configuration that is symmetric about a vertical plane (160) passing between the two crystals, in order to distribute symmetrically towards the base (12), a heat flux (150) generated in the carrier structure (13) asymmetrically with respect to the vertical plane (160).

2. Pockels cell according to the preceding claim, **characterized in that** the thermally conductive element is a vertical blade (15).

3. Pockels cell according to Claim 2, **characterized in that** the vertical blade (15) and the base (12) form a single piece.

4. Pockels cell according to Claim 2, **characterized in that** the vertical blade (15) and the carrier structure (13) form a single piece.

5. Pockels cell according to Claim 2, **characterized in that** the vertical blade (15), the base (12) and the carrier structure (13) form a single piece.

6. Pockels cell according to Claim 1, **characterized in that** the thermally conductive element consists of:
- a horizontal frame (151) intended to make contact with the carrier structure (13), having in its hollow centre;
- a horizontal plate (152) on which the base (12) is mounted, and which is joined to the frame (151) by
- an arm (153) that is located in the vertical plane (160) passing between the two crystals.

7. Pockels cell according to Claim 1, **characterized in that** the thermally conductive element is a horizontal platen (155) equipped with thermal braids (156) that are arranged on the edges of the platen perpendicular to the vertical plane (160) passing between the two crystals.

8. Q-switch laser with laser cavity containing a Pockels cell according to one of the preceding claims.

9. Wavelength switch that contains a laser and, at the outlet of the laser, a Pockels cell according to one of Claims 1 to 7.
